# EUROPÄISCHE PATENTSCHRIFT

(11) **EP 1 500 870 B1**
(45) Veröffentlichungstag und Bekanntmachung des Hinweises auf die Patenterteilung: **30.08.2006**
(21) Anmeldenummer: 04012171.7
(22) Anmeldetag: 22.05.2004
(51) Int. Cl.: F21S 9/03, F21S 8/08, F21V 21/30, F21V 17/02, F21W 131/109

(54) **Solarbetriebene Leuchte**
Solar powered lamp
Lampe alimentée à l'énergie solaire

(30) Priorität: 25.07.2003 DE 20311585 U
(43) Veröffentlichungstag der Anmeldung: 26.01.2005
(73) Patentinhaber: J. Wagner GmbH, 88677 Markdorf (DE)
(72) Erfinder: Göhring, Alfred, Dipl.-Ing., 88682 Salem (DE); Hagl-Prahn, Elke, 88677 Markdorf (DE); Ibele, Peter, 88263 Horgenzell (DE)
(74) Vertreter: Engelhardt, Guido

(56) Entgegenhaltungen:
- EP-A- 1 178 261
- DE-U- 29 521 271
- DE-U- 29 920 735
- US-A- 4 486 820
- US-A- 4 977 488
- US-A- 6 107 941

## Beschreibung

Die Erfindung bezieht sich auf eine solarbetriebene Leuchte, insbesondere für den Betrieb im Freien nach dem Oberbegriff des Patentanspruchs 1.

Durch die EP 1178261A2 wird eine Solarleuchte mit einem kugelförmigen mindestens teilweise lichtdurchlässigen Leuchtenkörper offenbart, deren Solarzellenträger verschwenkbar ist, um die auf dem Solarzellenträger fixierten Solarzellen in Richtung der Einfallswinkel der Sonnenstrahlen auszurichten. Zur Verstellmöglichkeit des Solarzellenträgers wird ein winkelvariables arretierbares Gelenk eingesetzt.

Aus der DE 102 01 816.2 ist der Aufbau und die Funktionsweise einer solarbetriebenen Leuchte zu entnehmen. Die Solarleuchte umfasst hierbei ein zylindrisches Gehäuse, in dessen Deckel eine Vielzahl von Solarzellen, die ein Solarzellenfeld bilden, angeordnet sind. Die Solarzellen sind dabei auf einer Trägerplatte angebracht, auf deren Unterseite, also auf der den Solarzellen gegenüberliegenden Seite, eine Steuerelektronik vorgesehen ist.

Des Weiteren sind zwei in das Innere des Gehäuses ragende Leuchtdioden mit der Trägerplatte und der Steuerelektronik elektrisch verbunden, die durch in dem Gehäuse untergebrachten Akkumulatoren mit Strom gespeist werden. Die Steuerelektronik regelt demnach den Betrieb der Solarleuchte, denn die von den Solarzellen umgewandelte Energie des Tageslichtes wird in den Akkumulatoren gespeichert. Sobald durch die Solarzellen nicht mehr genügend Energie umgewandelt werden kann, ändert sich der Betriebszustand der Solarleuchte dahingehend, dass durch die Steuerelektronik die Akkumulatoren mit den Leuchtdioden elektronisch verbunden werden, so dass diese als Lichtquelle dienen.

Das Gehäuse der Solarleuchte ist auf einem Stiel oder Pfosten fest angebracht, der beispielsweise in einem Rasenboden einsteckbar ist.

Dieser grundsätzliche Aufbau einer Solarleuchte wird nach der DE 100 26 524 derart weitergebildet , dass die Solarzellen in einer geneigt verlaufenden Ebene angeordnet sind. Die gesamte Solarleuchte weist einen säulenförmigen Aufbau auf, in dessen Kopfbereich die Solarzellen untergebracht sind. Der Kopfbereich ist gegenüber dem auf dem Boden aufstehenden Säulenunterteil drehbar. Folglich können die Solarzellen in Richtung der Sonne ausgerichtet werden.

Im Inneren der Säule sind Lichtquellen vorgesehen, die durch die transparent ausgebildete Säulenwand Licht abstrahlen.

Als nachteilig bei dem genannten Stand der Technik hat sich herausgestellt, dass die Solarzellen in Richtung der Sonne nicht optimal ausgerichtet werden können, denn der Säulenkopf mit den Solarzellen kann in seiner Neigung nicht verändert werden. Eine individuelle Einstellung des Lichtkegels gegenüber den Solarzellen kann zwar vorgenommen werden, aber dies ist mit einem erheblichen technischen Aufwand zu bewerkstelligen, denn die Lichtquelle ist im Säuleninneren angeordnet.

Es ist daher Aufgabe der Erfindung eine solarbetriebene Leuchte der eingangs genannten Gattung derart weiterzubilden, dass deren Solarzellenfeld optimal in Richtung der Sonneneinstrahlung während des Tagesverlaufes und der jeweiligen Sonnenneigung einstellbar und deren Lichtquelle unabhängig von der Anordnung des Solarzellenfeldes individuell ausrichtbar ist.

Diese Aufgabe wird erfindungsgemäß durch die Merkmale des kennzeichnenden Teils des Patentanspruches 1 gelöst.

Um eine individuelle optimale Einstellung der Lichtquelle und des Solarzellenfeldes zu erreichen, ist das Gelenk als Kardangelenk mit mindestens zwei Freiheitsgraden ausgebildet.

Weitere vorteilhafte Weiterbildungen der Erfindung ergeben sich aus den Merkmale der Unteransprüche.

Dadurch, dass die Lichtquelle und der die Solarzellen aufnehmende Halter als gesonderte Bauteile ausgebildet und über jeweils einen Gelenk mit dem Pfosten der Solarleuchte verbunden sind, können diese Bauteile individuell voneinander aus der horizontalen bzw. der vertikalen Ebene geneigt oder verschwenkt werden. Darüber hinaus ist auch eine Verdrehung dieser Bauteile um die Längsachse der Solarleuchte möglich. Folglich kann das Solarzellenfeld im Laufe des Tages sowie der unterschiedlichen Sonnenstrahleinfallswinkel sowohl in Neigung als auch in seiner Ausrichtung dem Sonnenverlauf nachgefahren werden. Während der Nacht kann die Lichtquelle, die beispielsweise als Strahler ausgebildet ist, auf einen besonders markanten Gegenstand, beispielsweise auf ein Gebüsch oder dergleichen, ausgerichtet werden, um dieses anzustrahlen, und zwar völlig unabhängig von der Positionierung des Solarzellenfeldes.

In den Zeichnungen sind drei erfindungsgemäße Ausführungsbeispiele in perspektivischer Ansicht dargestellt, die nachfolgend näher erläutert werden. Im Einzelnen zeigt :
- Figur 1: ein erstes Ausführungsbeispiel der solarbetriebenen Leuchte mit einem die Solarzellen aufnehmenden Halter und einem Strahler,
- Figur 2: ein zweites Ausführungsbeispiel einer solarbetriebenen Leuchte mit einem in einem Halter untergebrachten Solarzellenfeld und einer Lichtquelle, die jeweils in einem Ring verschwenkbar gehalten sind,
- Figur 3: ein drittes Ausführungsbeispiel einer solarbetriebenen Leuchte mit einem kugelförmigen eine Vielzahl von Solarzellen aufnehmenden Halter, an dem ein Bügel, an dem die Lichtquelle befestigt ist, drehbar und neigbar gehalten ist, und
- Figur 4: eine Vergrößerung des dritten Ausführungsbeispieles im Schnitt entlang der Schnittlinie IV - IV der Figur 3.

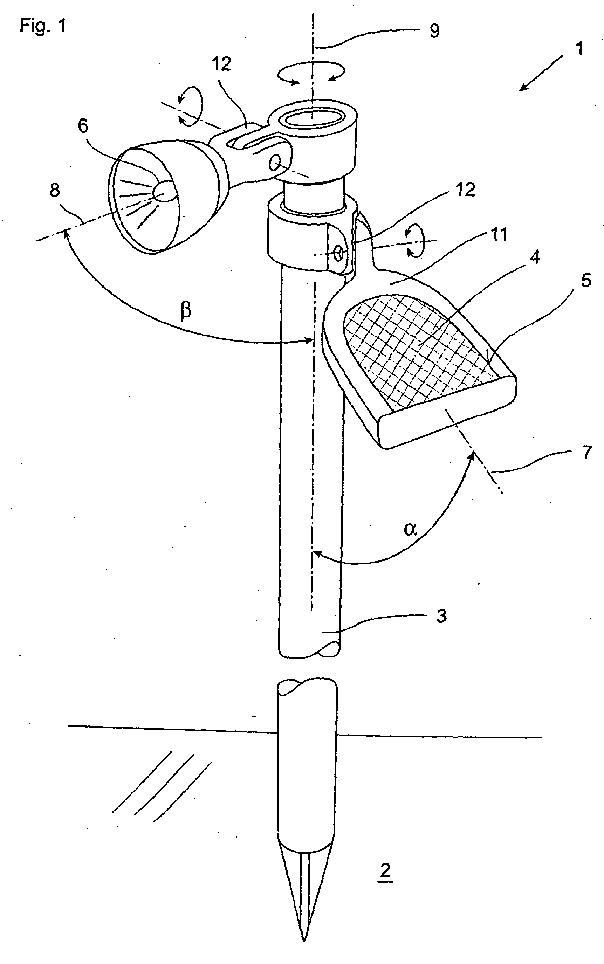

In Figur 1 ist eine solarbetriebene Leuchte 1, insbesondere für den Betrieb im Freien, dargestellt, die mit einem Pfosten 3 in einem Boden 2, beispielsweise einer Rasenfläche oder einem Gartenbeet, eingesteckt ist. Die Leuchte 1 weist ferner einen Halter 11 auf, in dem in Richtung der Sonne ausgerichtet eine Vielzahl von Solarzellen 4 befestigt sind. Die Solarzellen 4 bilden zusammen ein Solarzellenfeld 5.

In dem Halter 11 sind des Weiteren eine nicht dargestellte Steuerelektronik sowie mindestens ein Akkumulator vorgesehen. Die Solarzellen 4 wandeln die Lichtenergie in elektrische Energie um und geben diese tagsüber, also während des Umwandlungsprozesses an den Akkumulator weiter, der die elektrische Energie speichert.

Sobald das Tageslicht nicht mehr ausreichend ist, um elektrische Energie in die Akkumulatoren abzuführen, wird durch die Steuerelektronik eine elektrische Verbindung zwischen den Akkumulatoren und einer an dem Pfosten 3 angebrachten Lichtquelle 6 hergestellt, so dass nunmehr die als Strahler ausgebildete Lichtquelle 6 einen Leuchteffekt erzielt.

Die Lichtquelle 6 und der Halter 11 sind mittels jeweils eines Gelenkes 12 in dem oberen Bereich des Pfostens 3 beweglich befestigt. Zum einen kann nämlich das Gelenk 12 relativ, also um die vertikale Achse 9 des Pfostens 3, verdreht werden. Darüber hinaus weist das Gelenk 12 einen weiteren Freiheitsgrad auf, so dass der Neigungswinkel sowohl der Lichtquelle 6 als auch des Halters 11 gegenüber der vertikalen Achse 9 des Pfostens 3 verschwenkt werden kann.

In den Figuren 1 bis 3 ist diese Verschwenkbarkeit bzw. Einstellbarkeit des Neigungswinkels zwischen den Mittelachsen 7 des Halters 11 und der Mittelachse der Lichtquelle 6 mit dem Winkel α bzw. β bezeichnet.

Ferner ist die Beweglichkeit der beiden Gelenke 12 um die vertikale Achse 9 des Pfostens 3 dargestellt:

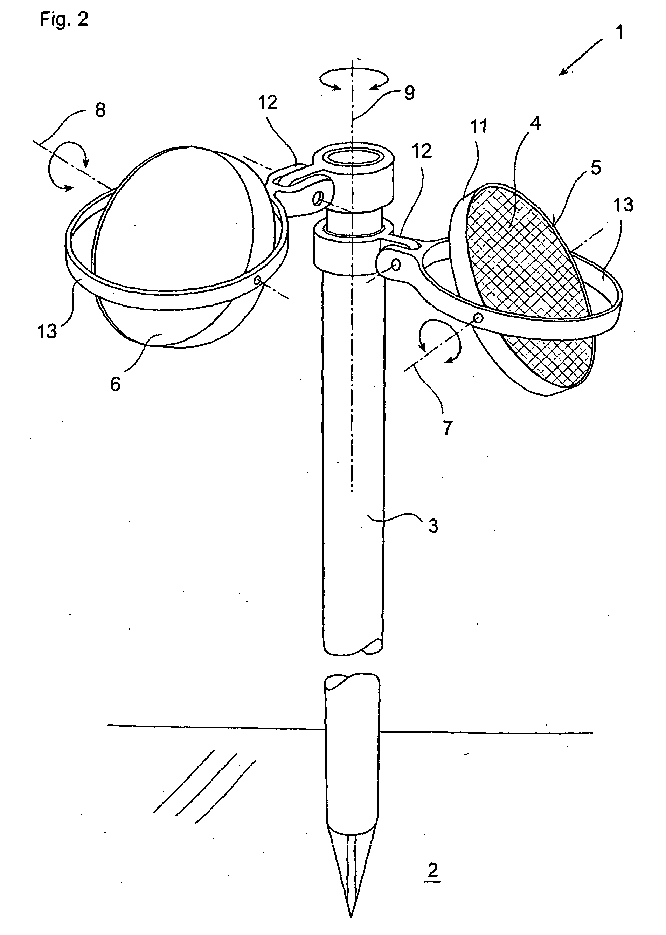

In Figur 2 ist der Halter 11 und die Lichtquelle 6 in einem Ring 13 verschwenkbar gehalten. Der Ring 13 ist jeweils über das Gelenk 12 in gleicher Weise wie das Ausführungsbeispiel gem. Figur 1 mit dem Pfosten 3 verbunden. Es besteht die Möglichkeit, den Ring 13 als nach außen offenen Halbkreis auszubilden, so dass dieser die Lichtstrahlen der Lichtquelle 6 sowie die auf das Solarzellenfeld 5 auftreffende Sonnenstrahlen nicht behindert werden.

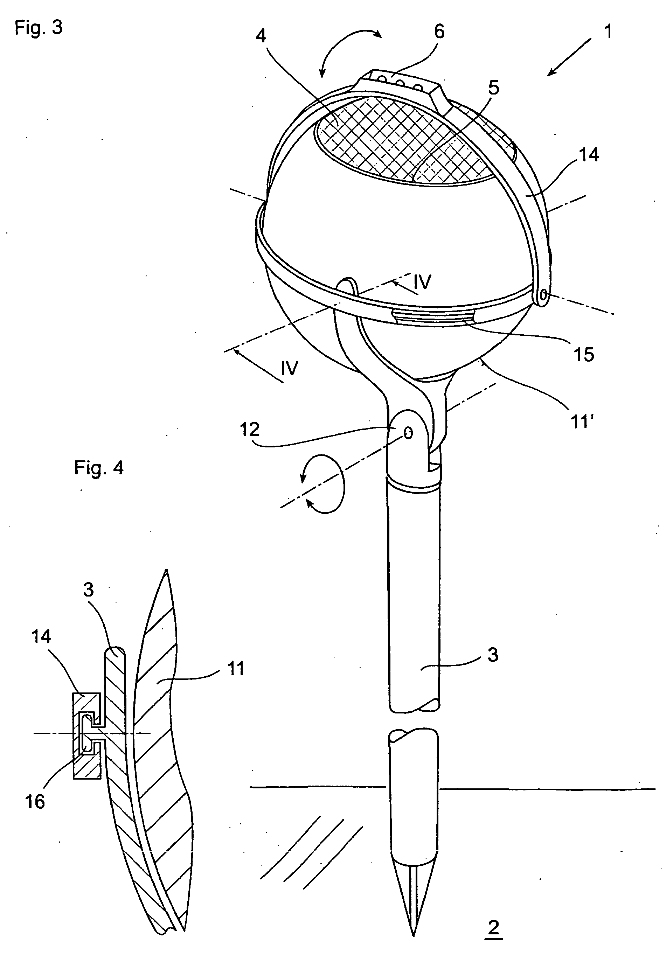

In Figur 3 ist der Halter 11' kugelförmig ausgebildet und der Pfosten 3 weist eine im Querschnitt V-förmig ausgebildete Aufnahmetasche auf, in der der Halter 11' fest eingesetzt ist. Zwischen der V-förmigen Aufnahmetasche und dem Pfosten 3 ist das Gelenk 12 vorgesehen, so dass der Neigungswinkel des Halters 11' aus der vertikalen Achse 9 geneigt eingestellt werden kann.

Der kugelförmige Halter 11' weist in seinem Inneren eine nicht dargestellte zusätzliche Lichtquelle auf, so dass der Halter 11' ausleuchtbar ist. Bei dieser Ausführungsvariante besteht der Halter 11' aus einem transparenten oder semi-transparent Material.

Insbesondere Figur 4 ist zu entnehmen, dass in Umfangsrichtung des Halters 11' ein Nutenstein 16 angeformt ist, an dem an zwei Positionen ein Bügel 14 diesen umgreift. Folglich kann der Bügel 14 in Umfangsrichtung des Halters 11' verfahren werden. Gleichzeitig ist es möglich, den Bügel 14, an dessen mittlerer Position die Lichtquelle 6 angebracht ist, in jede beliebige Winkelposition um die beiden Anlenkpunkte an den Nutensteinen 16 zu verschwenken.

Allen drei Ausführungsbeispielen ist demnach gemeinsam, dass die Lichtquelle 6 unabhängig von der Positionierung des Solarzellenfeldes 5 ausgerichtet werden kann. Dies erhöht den Wirkungsgrad der solarbetriebenen Leuchte 1 wesentlich, denn das Solarzellenfeld 5 kann durch die Einstellung der Neigung
derart verfahren werden, dass die Sonnenstrahlen mehr oder weniger senkrecht auf das Solarzellenfeld auftreffen und daher tagsüber ein genügend großer Lichteinfall gegeben ist.

Darüber hinaus ist die Lichtquelle 6 als Strahler ausgebildet, mittels dem eine exakte Beleuchtung eines bestimmten Gegenstandes während der Nacht vorgenommen werden kann.

Der Einsatzzweck und der Wirkungsgrad der solarbetriebenen Leuchte 1 ist daher wesentlich verbessert.

Um eine ästhetische Anpassung der Leuchte 1 an den Aufstellungsort zu ermöglichen, ist der Halter 11 als Blatt einer Blume oder eines Baumes ausgebildet. Die Lichtquelle 6 kann eine stilisierte Blüte einer Pflanze darstellen, so dass die Leuchte 1 einen natürlichen ästhetischen Wirkungseffekt hervorruft.

## Patentansprüche

1. Solarbetriebene Leuchte (1), insbesondere für den Betrieb im Freien, mit einer Vielzahl von in einem Halter (11) eingesetzten Solarzellen (4), die ein Solarzellenfeld (5) bilden, und mit mindestens einer mit dem Solarzellenfeld (5) elektrisch verbundenen Lichtquelle (6), wobei die Lichtquelle (6) und der das Solarzellenfeld (5), eine Steuerelektronik sowie einen oder mehreren Akkumulatoren aufnehmende Halter (11) an einem Pfosten (3), einem Stab oder dgl. angebracht sind,
**dadurch gekennzeichnet,**
**dass** der Halter (11) des Solarzellenfeldes (5) als gesondertes Bauteil ausgebildet ist, das zur Lichtquelle (6) ausrichtbar ist und dass die Lichtquelle (6) und der Halter (11) jeweils mittels eines Gelenkes (12) an dem Pfosten (3) abgestützt sind.

2. Leuchte nach Anspruch 1,
**dadurch gekennzeichnet,**
**dass** das Gelenk (12) als Kardangelenk mit mindestens zwei Freiheitsgraden ausgebildet ist.

3. Leuchte nach Anspruch 1 oder 2,
**dadurch gekennzeichnet,**
**dass** der Halter (11) und/oder die Lichtquelle (6) in einem Ring (13), der relativ zu dem Pfosten (3) drehbar ist, gehalten sind.

4. Leuchte nach einem oder mehreren
der vorgenannten Ansprüche,
**dadurch gekennzeichnet,**
**dass** die Lichtquelle (6) in einem Bügel (14) angeordnet ist und dass der Bügel (14) drehbar und/oder neigbar an dem Halter (11) abgestützt ist.

5. Leuchte nach einem oder mehreren
der vorgenannten Ansprüche,
**dadurch gekennzeichnet,**
**dass** der Halter (11) als Blatt einer Blume, eines Baumes oder dgl. gestaltet ist.

6. Leuchte nach einem oder mehreren
der vorgenannten Ansprüche,
**dadurch gekennzeichnet,**
**dass** die Lichtquelle (6) als Strahler ausgebildet ist.

7. Leuchte nach einem oder mehreren
der vorgenannten Ansprüche,
**dadurch gekennzeichnet,**
**dass** mehrere Solarzellenfelder (5) vorgesehen sind, die in voneinander getrennten Halter (11) befestigt sind.

## Claims

1. A solar operated lamp (1), in particular for operation outdoors, with a plurality of solar cells (4) inserted in a holder (11) that form a solar cell panel (5), and with at least one light source (6) connected to the solar cell panel (5), in which case the light source (6) and the holder (11) accommodating the solar cell panel (5), an electronic control unit and one or more rechargeable batteries are attached to a post (3), a rod or the like,
**characterized in that**,
the holder (11) of the solar cell panel (5) is formed as a separate component that can be aligned towards the light source (6) and that the light source (6) and the holder (11) are each supported on the post (3) by means of a joint (12).

2. The lamp in accordance with Claim 1,
**characterized in that**,
the joint (12) is configured as a cardan joint with at least two degrees of freedom.

3. The lamp in accordance with Claim 1 or 2,
**characterized in that**,
the holder (11) and/or the light source (6) are held in a ring (13) that can be rotated relative to the post (3).

4. The lamp in accordance with one or more of the aforementioned claims,
**characterized in that**,
the light source (6) is arranged in a stirrup (14) and that the stirrup (14) can be turned and/or angled in its mounting on the holder (11).

5. The lamp in accordance with one or more of the aforementioned claims,
**characterized in that**,
the holder (11) is configured as the leaf of a flower, a tree or the like.

6. The lamp in accordance with one or more of the aforementioned claims,
**characterized in that**,
the light source (6) is configured as a reflector lamp.

7. The lamp in accordance with one or more of the aforementioned claims,
**characterized in that**,
several solar cell panels (5) are provided and attached in separate holders (11).

## Revendications

1. Lampe solaire (1), prévue notamment pour l'utilisation à l'air libre, comprenant une multitude de cellules solaires (4) insérées dans un support (11) et formant un champ de cellules solaires (5), ainsi qu'au moins une source de lumière (6) raccordée électriquement au champ de cellules solaires (5), où la source de lumière (6) et le support (11) portant le champ de cellules solaires (5), une électronique de commande ainsi qu'un ou plusieurs accumulateurs, est fixé à un poteau (3), à une barre ou à un dispositif similaire,
**caractérisée en ce que**
le support (11) du champ de cellules solaires (5) est conçu en tant que composant séparé qui se laisse aligner par rapport à la source de lumière (6), et que la source de lumière (6) et le support (11) s'appuient respectivement par l'intermédiaire d'une articulation (12) sur le poteau (3).

2. Lampe d'après la revendication 1,
**caractérisée en ce que**
l'articulation (12) est conçue sous la forme d'une articulation à cardan avec au moins deux degrés de liberté.

3. Lampe d'après la revendication 1 ou 2,
**caractérisée en ce que**
le support (11) et/ou la source de lumière (6) sont montés dans un anneau (13) qui se laisse tourner relativement au poteau (3).

4. Lampe d'après une ou plusieurs des revendications précédentes,
**caractérisée en ce que**
la source de lumière (6) est montée dans un étrier (14) et que l'étrier (14) est fixé sur le poteau (3) de sorte qu'il se laisse tourner et/ou incliner.

5. Lampe d'après une ou plusieurs des revendications précédentes,
**caractérisée en ce que**
le support (11) est conçu sous la forme d'une pétale d'une fleur, d'une feuille d'arbre etc.

6. Lampe d'après une ou plusieurs des revendications précédentes,
**caractérisée en ce que**
la source de lumière est conçue sous la forme d'un projecteur.

7. Lampe d'après une ou plusieurs des revendications précédentes,
**caractérisée en ce**
**qu'**il est prévu plusieurs champs de cellules solaires (5) fixés dans des supports (11) séparés l'un de l'autre.
